# EUROPÄISCHE PATENTSCHRIFT

(11) **EP 0 456 653 B1**
(45) Veröffentlichungstag und Bekanntmachung des Hinweises auf die Patenterteilung: **02.03.1994**
(21) Anmeldenummer: 90901788.1
(22) Anmeldetag: 10.01.1990
(51) Int. Cl.: B60T 8/00

(54) **SCHALTUNGSANORDNUNG FÜR EINE BREMSANLAGE MIT BLOCKIERSCHUTZREGELUNG**
CIRCUIT ARRANGEMENT FOR A BRAKE SYSTEM WITH ANTI-LOCK
CIRCUIT POUR SYSTEME DE FREINAGE A REGULATION ANTI-BLOCAGE

(30) Priorität: 03.02.1989 DE 3903180
(43) Veröffentlichungstag der Anmeldung: 21.11.1991
(73) Patentinhaber: ITT Automotive Europe GmbH, 60488 Frankfurt (DE)
(72) Erfinder: FENNEL, Helmut, D-6232 Bad Soden (DE); WUPPER, Hans, D-6382 Friedrichsdorf (DE); BUSCHMANN, Gunther, D-6103 Griesheim (DE); BATISTIC, Ivica, D-6000 Frankfurt/Main 60 (DE); EHMER, Norbert, D-6482 Bad Orb (DE); SCHMIDT, Robert, D-5439 Rennerod (DE)
(86) Internationale Anmeldenummer: EP9000046
(87) Internationale Veröffentlichungsnummer: WO9008681

(56) Entgegenhaltungen:
- EP-A- 0 298 498
- WO-A-87/05869
- WO-A-88/02709
- DE-A- 2 460 904
- DE-A- 2 553 000
- DE-A- 3 326 959
- US-A- 4 585 280

## Beschreibung

Die Erfindung bezieht sich auf eine Schaltungsanordnung für eine Bremsanlage mit Blockierschutzregelung zur Steuerung des Druckaufbaues nach dem Einsetzen der Regelung durch Erzeugung von pulsförmigen Steuersignalen, mit denen in zu den Radbremsen führenden Druckmittelwegen eingefügte Mehrwegeventile steuerbar sind, wobei durch Bemessung der Puls- und Pulspausenzeiten der Druck zunächst mit steilem, danach mit flacherem Gradienten einsteuerbar ist und wobei der Druckaufbau im ersten Zyklus nach dem Einsetzen der Regelung von dem vorangegangenen Druckabbau und in den weiteren Zyklen von dem Druckaufbau in den vorangegangenen Zyklen abhängig ist.

Eine derartige Schaltungsanordnung ist bereits durch die DE-Patentschrift 24 60 904 bekannt. Es wird dort grundsätzlich während der Blockierschutzregelung der Bremsdruck zunächst mit steilem, anschließend mit flacherem Gradienten wieder erhöht. Der steile Druckanstieg wird vorzugsweise durch einen langen Puls, der flachere Anstieg durch kurze Pulse, die mit relativ großem Abstand aufeinanderfolgen, erreicht. Die Dauer des Druckanstieges mit steilem Gradienten wird dabei in Abhängigkeit von dem Druckaufbau in dem oder den vorhergehenden Regelzyklen variiert. Zur Bemessung der steilen Phase des ersten Regelzyklus, für den es keinen vorhergehenden geregelten Druckaufbau gibt, wird die Höhe bzw. die Dauer des vorhergehenden Bremsdruckabbaues berücksichtigt.

Nach der Europäischen Patentanmeldung Nr. 177 817, die sich ebenfalls auf den Druck-Wiederaufbau mit einem zunächst steilen, dann flacheren Gradienten bezieht, ist es bekannt, die Druckhöhe des ersten Druckaufbauimpulses, der die Phase des steilen Druckanstieges bestimmt, zusätzlich von einem Quotienten abhängig zu machen, der sich aus der maximalen Radbeschleunigung dividiert durch die Summe der Beträge der maximalen Radbeschleunigung und der maximalen Radverzögerung ergibt. In einem Ausführungsbeispiel entspricht die Druckhöhe des ersten Druckaufbaupulses dem vorangegangenen Druckabbau multipliziert mit dem vorgenannten Quotienten und mit einem Faktor nahe 1.

Aus der internationalen Patentanmeldung WO 88/02709 ist bereits ein Antiblockiersystem bekannt, bei dem ebenfalls während eines Regelzyklus der Bremsdruck nach einem Druckabbau zuerst mit einem großen Gradienten und danach mit einem geringeren Gradienten wieder aufgebaut wird. Die Zeitdauer des Druckaufbaues mit großem Gradienten ist bei diesem bekannten System abhängig von der Dauer des direkt vorher erfolgten Druckabbaues und von dem Verhältnis der Dauer des Druckaufbaues zu der Dauer des Druckabbaues in dem vorhergehenden Regelzyklus. Auf diese Weise soll sich ein für die Regelung optimaler Wert für die Zeitspanne des Druckaufbaues mit großem Gradienten ergeben.

Eine Bremsdruckregelung nach den vorgenannten Prinzipien führt nicht in allen Fällen zu zufriedenstellenden Ergebnissen. Der Erfindung liegt daher die Aufgabe zugrunde, zur Verbesserung der Regelung den Bremsdruckwiederaufbau noch genauer der jeweiligen Situation und den jeweiligen Gegebenheiten anzupassen, um einerseits die Aufrechterhaltung der Fahrstabilität zu gewährleisten und andererseits durch frühzeitiges Erreichen des Blockierdruckniveaus während der einzelnen Regelzyklen einen möglichst kurzen Bremsweg sicherzustellen.

Es hat sich nun gezeigt, daß diese Aufgabe mit einer Schaltungsanordnung der eingangs genannten Art gelöst werden kann, deren Besonderheit darin besteht, daß Schaltkreise vorhanden sind, die die Puls- und Pulspausenzeiten, die den Druckaufbau bestimmen, in den auf den ersten Zyklus folgenden Zyklen von der Dauer des Druckaufbaues oder der Anzahl der Druckaufbaupulse während des Druckaufbaues mit steilem Gradienten im vorangegangenen Zyklus, von der Dauer der gesamten Druckaufbauphase des vorangegangenen Zyklus und von der Dauer des vorangegangenen Druckabbaues abhängig machen, wobei die Pulszeiten und insbesondere die Dauer des Druckanstiegs in der Phase des steilen Gradienten derart bemessen sind, daß bei annähernd konstantem Reibwert bzw. Reibbeiwert und annähernd gleichbleibenden Vordruck die Blockiergrenze des Rades nach einer vorgegebenen Zeitspanne oder nach einer vorgegebenen Pulszahl wieder erreicht ist.

Unter Vordruck wird dabei der Bremsdruck im Hauptzylinder verstanden, der von der Höhe der von dem Fahrer auf das Bremspedal ausgeübte Kraft abhängig ist.

Ist die Voraussetzung eines konstanten Reibbeiwertes nicht gegeben, wird die Blockiergrenze früher oder erst nach einer größeren Anzahl von "festen" Pulsen, das sind die im "festen" Abstand aufeinanderfolgenden kurzen Pulse, wieder erreicht.

Die erfindungsgemäße Schaltung gewährleistet unter allen Straßenbedingungen eine schnelle Annäherung des Druckes an das optimale Druckniveau, wodurch vor allem auch unter ungünstigen Umständen eine Unterbremsung verhindert und ein kurzer Bremsweg erreicht wird.

Nach einer vorteilhaften Ausführungsart der Erfindung sind der Druckaufbau mit steilem Gradienten durch einen variablen Puls und der Druckaufbau mit flachem Gradienten durch "feste" Pulse, das sind relativ kurze Pulse konstanter Dauer, die im konstanten Abstand aufeinanderfolgen, herbeiführbar. Besonders vorteilhaft ist es, gemäß einer weiteren Ausführungsart die Proportionalität der Dauer dieser sogenannten "festen" Pulse zur Dauer des variablen Pulses bzw. der Dauer des steilen Druckanstieges bei zu behalten.

Die vorgegebene Pulszahl, nach der das Rad die Blockiergrenze wieder erreicht, liegt vorteilhafterweise einschließlich des variablen Pulses zwischen drei und fünf, vorzugsweise sind es drei Pulse. Andererseits ist es auch möglich, die Pulszeiten derart zu bemessen, daß sich eine Regelfrequenz von etwa 3 bis 10 Hz, vorzugsweise 3 bis 5 Hz, einstellt.

Nach einer weiteren Ausführungsart der Erfindung ist die Dauer des Druckanstieges des steilen Gradienten in Abhängigkeit von der Anzahl der Pulse oder der Dauer des steilen Druckanstieges im vorangegangenen Zyklus und von der gesamten Druckaufbauphase oder der Gesamtzahl der Pulse nach errechneten oder in einer Tabelle gespeicherten Werten ermittelbar. Anstelle der Gesamtzahl der Pulse kann natürlich auch die Anzahl der Pulse in der Druckanstiegsphase mit flacherem Gradienten der Berechnung zugrundegelegt werden.

In vielen Fällen ist es von Vorteil, den errechneten oder aus der gespeicherten Tabelle ermittelten Wert für die Bemessung des steilen Druckanstieges unter Berücksichtigung des vorangegangenen Druckabbaues zu korrigieren und auf einen vorgegebenen Maximalwert oder auf einen vorgegebenen Minimalwert in Relation zu der Dauer des Druckabbaues zu reduzieren bzw. anzuheben. Der Maximalwert kann dabei auf einen vorgegebenen Wert im Bereich zwischen 40 % und 60 % und der Minimalwert auf einen vorgegebenen Wert im Bereich zwischen 10 % und 30 % der Dauer des vorangegangenen Druckabbaues festgelegt werden.

Eine Ausführungsart der Erfindung besteht darin, daß das Anheben des ermittelten Wertes des steilen Druckanstieges beim Erreichen des Minimalwertes unterbleibt, wenn der momentane Reibbeiwert gering ist (Niedrigreibwert).

Nach dem Anheben des steilen Druckanstieges auf den Minimalwert unterbleibt in den folgenden Regelzyklen eine erneute Anhebung, solange die Dauer des Druckanstieges oder die Anzahl der Druckaufbaupulse einen vorgegebenen Grenzwert von z. B. zwei Pulsen pro Regelzyklus nicht überschreitet.

Nach einer weiteren Ausführungsart der erfindungsgemäßen Schaltungsanordnung ist die errechnete oder aus der Tabelle ermittelte Dauer des steilen Druckanstieges in Abhängigkeit von der zuvor gemessenen Hochlaufbeschleunigung des Rades anhebbar, wenn diese Hochlaufbeschleunigung vorgegebene Schwellen überschreitet.

Schließlich ist nach einer weiteren Ausführungsart der Erfindung der Druckaufbau bereits dann einleitbar, sobald die Hochlaufbeschleunigung einen vorgegebenen Grenzwert im Bereich zwischen 10 und 20g, z. B. 12 bis 15g, überschreitet, wenn im vorangegangenen Zyklus die Dauer des Druckabbaues relativ lang war bzw. über einem vorgegebenen Grenzwert lag.

Weitere Merkmale, Vorteile und Anwendungsmöglichkeiten der Erfindung gehen aus der folgenden Beschreibung anhand der beigefügten Schaltungsanordnung, der Diagramme und der Tabelle hervor, die sich auf Ausführungsbeispiele der Erfindung beziehen.

Es zeigen
- Fig. 1: im Blockschaltbild eine Schaltungsanordnung nach der Erfindung,
- Fig. 2: in Diagrammen den Druckverlauf während einher Blockierschutzregelung sowie die entsprechenden Ventilpulse, und
- Fig. 3: eine in der Schaltungsanordnung nach Fig. 1 speicherbare Tabelle zur Ermittlung der Dauer des steilen Druckanstieges in Abhängigkeit von Werten im vorangegangenen Zyklus.

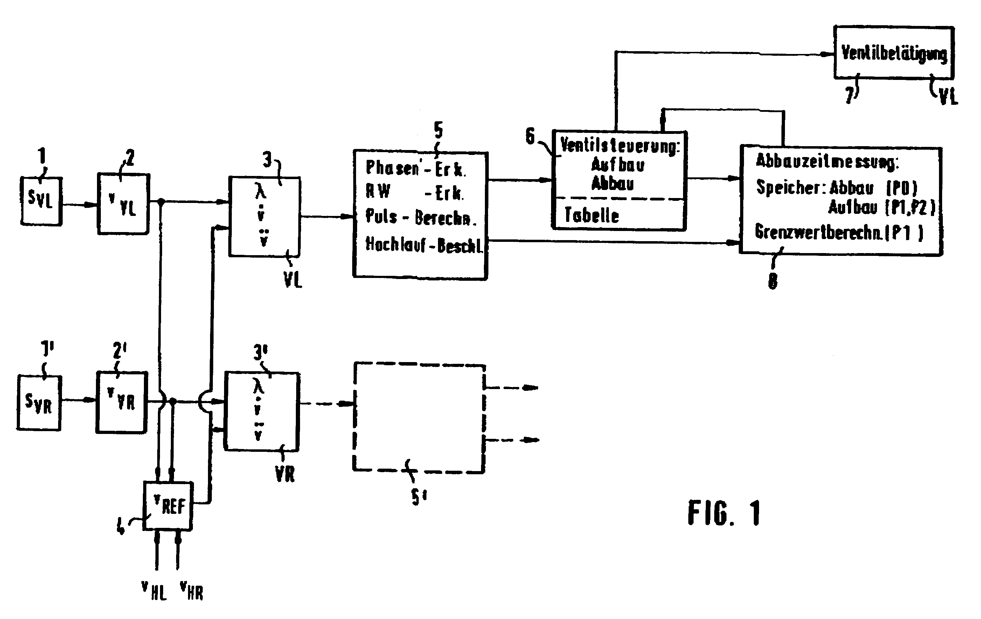

Fig. 1 dient zur Erläuterung der wichtigsten elektronischen Komponenten einer Schaltungsanordnung nach der Erfindung für einen Regelkanal, nämlich dem Regelkanal des linken Vorderrades VL. Einige Komponenten des Regelkanals des rechten Vorderrades VR sind ebenfalls dargestellt. Auf die Wiedergabe der gleichartigen Regelkanäle für die Hinterräder HL und HR wurde der Übersichtlichkeit wegen verzichtet.

Wie Fig. 1 zeigt, wird in dem dargestellten Ausführungsbeispiel das Drehverhalten der Räder VL, VR mit Hilfe von Radsensoren 1,1, (S_{VL},S_{VR}) gemessen. In einem anschließenden Schaltkreis 2 (2') wird jeweils ein für die Weiterverarbeitung brauchbares Geschwindigkeitssignal v_{VL} (v_{VR}) gewonnen. Aus diesem Signal wird in bekannter Weise in einem weiteren Schaltkreis 3 (3') der momentane Schlupf Lambda,. die Beschleunigung oder Verzögerung v̇, der Ruck 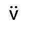 errechnet, und zwar individuell für jedes Rad unter Berücksichtigung einer Fahrzeugreferenzgeschwindigkeit v_{REF}.

Zur Bildung dieser Fahrzeugreferenzgeschwindigkeit v_{REF}, die bekanntlich als Bezugsgröße zur Beurteilung des momentanen Drehverhaltens der einzelnen Räder dient, werden alle Rad-Geschwindigkeitssignale v_{VL}, v_{VR}, v_{HL} und v_{HR} in einem Schaltkreis 4 logisch verknüpft und nach bestimmten Kriterien ausgewertet. Das Ausgangssignal des Schaltkreises 4, nämlich das v_{REF}-Signal wird dann den einzelnen Schaltkreisen 3,3' zugeführt, weil es u. a. zur Ermittlung des Schlupfes Lambda benötigt wird.

In einer Regellogik 5 (5') werden die verarbeiteten Sensorsignale ausgewertet. Es erfolgt eine sogenannte Phasenerkennung, in der festgestellt wird, ob das Rad stabil läuft, Blockierneigung besteht, eine Wiederbeschleunigung erfolgt usw. Auch wird durch Auswertung bekannter Kriterien auf den momentan vorhandenen Reibbeiwert bzw. Straßenzustand geschlossen; hierzu dient die Reibbeiwert-Erkennung. Unter Berücksichtigung dieser Information werden schließlich die Pulssteuersignale berechnend (Puls-Berechnung), mit denen durch Steuerung des Bremsdruckaufbaues und -abbaues der gewünschte Bremsdruckverlauf in den Radbremsen der einzelnen Rädern herbeigeführt werden soll.

Die Regellogik 5 (5') erhält noch einen Schaltzweig "Hochlaufbeschleunigung", der Signale liefert, wenn die Hochlaufbeschleunigung des Rades VL(VR) bestimmte Spitzenwerte überschreitet. Wie hier später noch erläutert, wird bei besonders hoher Hochlaufbeschleunigung die Phase des steilen Druckanstieges zusätzlich verlängert.

Zur Ventilsteuerung ist ein weiterer Schaltkreis 6 vorgesehen, mit dem die in der Regellogik 5 errechnenden Pulssignale modifiziert und mit dem in Abhängigkeit von weiteren Kriterien die eigentlichen Ventilbetätigungsignale erzeugt werden, die schließlich zu einer Endstufe 7, nämlich der "Ventilbetätigung", weitergeleitet werden.

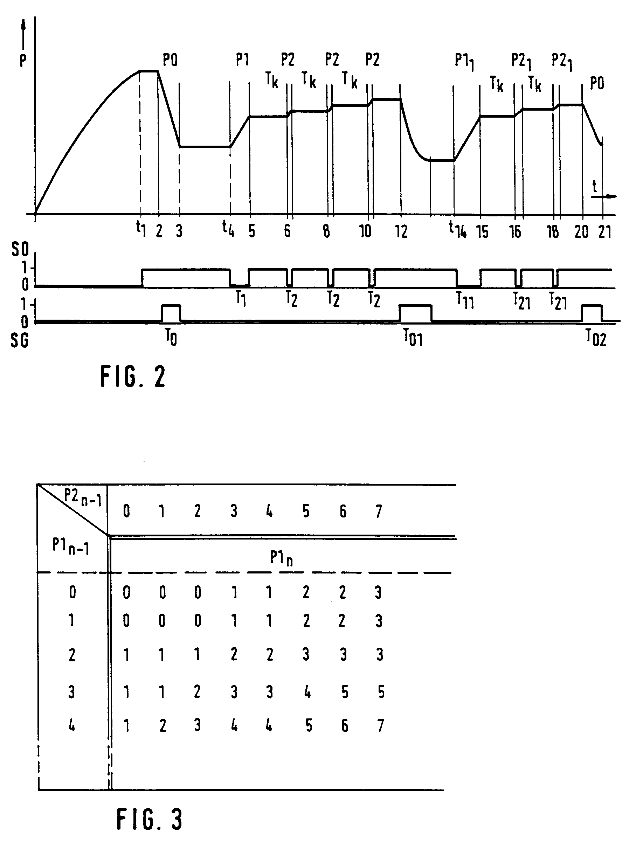

Diese mit Hilfe einer Schaltung 8 ermittelten Kriterien, die die Ventilsteuerung 6 bei der Festlegung der Ventilbetätigungssignale berücksichtigt, werden u.a. durch Messung des Druckabbaues bzw. der entsprechenden Pulszeiten im vorangegangenen Regelzyklus, aus gespeicherten Daten über den Druckabbau und Druckaufbau in dem vorangegangenen Zyklus und schließlich aus vorgegebenen Grenzwerten für die Dauer der steilen Druckanstiegsphase abgeleitet. Im folgenden wird dies noch genauer anhand der Fig. 2 und 3 erläutert.

Als Sensor 1,1' läßt sich beispielsweise ein induktiver Meßwertaufnehmer mit passiver oder aktiver Meßschaltung verwenden, der ein Signal abgibt, dessen Frequenz zu der Drehzahl proportional ist. Die übrigen Komponenten der Prinzipschaltung nach Fig. 1 lassen sich grundsätzlich durch fest verdrahtete oder auch durch programmgesteuerte Schaltkreise, vorzugsweise unter Verwendung von Mikrocomputern, verwirklichen.

Fig. 2 zeigt den Bremsdruckverlauf in einer Radbremse, während eines geregelten Bremsvorganges bei Verwendung der erfindungsgemäßen Schaltungsanordnung. Die Bremsdrucksteuersignale, mit denen dieser Druckverlauf erreicht wird, sind ebenfalls angegeben. Mit SG (stromlos geschlossen) sind die Pulse bezeichnet, die das Bremsdruck-Abbauventil erregen, während SO (stromlos offen) die Schaltstellung des sogenannten Einlaßventils wiedergibt, das normalerweise in den von dem Bremsdruckgeber zu der Radbremse führenden Druckmittelweg eingefügt ist. Im stromlosen Zustand ist das SO-Ventil auf Durchlaß geschaltet. Die Ventile sind hier nicht dargestellt.

Zum Zeitpunkt t₁ setzt in dem hier erläuterten Vorgang der Blockierschutzregelvorgang ein. Das SO-Ventil wird auf Sperren umgeschaltet. Durch Erregen des SG-Ventils in der Zeitspanne von t₂ bis t₃ wird der Bremsdruck abgebaut, woran sich bis t₄ wieder eine Druck-Konstanthaltephase anschließt, in der beide Ventile SO- und SG geschlossen sind. Sobald das Rad wieder in eine stabile Phase eintritt, wird der Druck wieder aufgebaut, und zwar zuerst mit steilem Gradienten während der Zeitspanne zwischen t₄ und T₅ (die Dauer des Pulses P1 beträgt T₁) und anschließend mit flachem Gradienten, was durch kurze Ventil-Öffnungspulse P2 erreicht wird, die mit relativ großem Abstand Tₖ aufeinanderfolgen. Während der Zeit Tₖ sind wiederum beide Ventile SG und SO auf Sperren geschaltet bzw. der durch sie hindurchführende Druckmittelweg geschlossen. Die Dauer T₁ des Pulses P1 wird von der Regelelektronik errechnet und ist variabel. Die kurzen Pulse P2 werden dagegen hier als "feste" Pulse bezeichnet, weil der Pulsabstand Tₖ und auch die Dauer T₂ in vielen Fällen konstant sind. Nach einem vorteilhaften Ausführungsbeispiel wird allerdings die Pulsdauer T₂ der Dauer T₁ des variablen Pulses P1 angeglichen.T₂ ist in diesem Fall stets proportional oder annähernd proportional zu T₁.

In dem zum Zeitpunkt t₄ beginnenden Regelzyklus wird die Dauer des steilen Pulses P1 in Abhängigkeit von der Dauer Tₒ des Druckabbaues bestimmt. In dem zum Zeitpunkt t₁₄ beginnenden Regelzyklus und in allen folgenden richtet sich dagegen der erste Puls bzw. der variable Puls P1₁ nach dem vorangegangenen Druckaufbauvorgang. Von der Schaltungsanordnung nach Fig. 1 wird dabei die Dauer T₁₁ des Pulses P1, derart berechnet, daß bei gleichbleibendem Reibbeiwert und gleichbleibendem Vordruck das geregelte Rad nach drei Pulsen, einschließlich des variablen Pulses, die Stabilitätsgrenze wieder erreicht. Der Bremsdruck wird also in einer definierten Zeit wieder dem optimalen Wert angenähert, wodurch eine Unterbremsung, die sich bei zu langsamen Druckaufbau ergäbe, verhindert und eine bestimmte Regelfrequenz von beispielsweise 3 bis 5 Hz eingestellt wird.

Im vorliegenden Beispiel wird der steile Druckanstieg durch einen einzigen variablen Puls erreicht. Die Dauer T₁₁ dieses Pulses im zweiten Regelzyklus (und in den folgenden) wird aus der Dauer T₁ des steilen Druckanstieges bzw. des variablen Pulses P1 des vorangegangenen Regelzyklus und aus der Gesamtdauer des Druckaufbaues im vorangegangenen Regelzyklus, also aus dem Puls P1 und der Gesamtzahl der festen Pulse P2 errechnet. Von besonderem Vorteil ist es, wenn zur Ermittlung der Dauer dieses variablen Pulses P1₁ auf vorgegebene Werte zurückgegriffen werden kann, die in Form einer Tabelle in der Regelschaltung, z. B. in der Ventilsteuerung 6 nach Fig. 1, gespeichert sind. Bei Verwendung von Mikrocomputern wird durch einen solchen Tabellenzugriff die Programmlaufzeit verkürzt und der Speicherplatzbedarf verringert. Als Beispiel ist ein Auszug aus einer solchen Tabelle in Fig. 3 wiedergegeben. Die Zahlen kennzeichnen Zeiteinheiten. In der oberen Reihe ist die Anzahl der festen Pulse P2ₙ₋₁ im vorangegangenen Regelzyklus, in der ersten Spalte die Dauer des vorangegangenen variablen Impulses P1ₙ₋₁ angegeben. Die Dauer des Pulses P₁ₙ kann somit unmittelbar der Matrix entnommen werden. In einem Ausführungsbeispiel betrugen die Einheiten der Tabelle ca. 1 bis 1,2 msec. Erschien "O" in der Tabelle, wurde zwar ein Druckaufbaupuls ausgelöst, aber mit sehr geringer Dauer. Diese Situation trat ein, wenn ein sehr hoher Vordruck herrschte.

Der berechnete oder aus der Tabelle entnommene Wert P1ₙ ist außerdem noch vom Druckabbau im vorangegangenen Zyklus abhängig. Mit Hilfe der Schaltung 8 wird erreicht, daß der variable Puls P1₁ mindestens eine bestimmte Dauer im Verhältnis zur Länge des vorangegangenen Druckabbaues, z. B. mindestens 20 % der Druckabbaudauer Tₒ₁ beträgt. Die maximale Dauer des variablen Pulses P1 ist ebenfalls durch die Schaltung 8 festgelegt. Die maximale Länge bzw. Dauer des Pulses P1 wird nämlich auf einen bestimmten Wert im Verhältnis zur Dauer des Druckabbaues Tₒ, z. B. auf ca. 50 % dieses vorangegangenen Druckabbaupulses, begrenzt.

Diese Korrektur bzw. Anhebung der Dauer des variablen Pulses P1 durch die Grenzwertberechnung in der Schaltung 8 auf den Mindestwert von z. B. 20 % des vorangegangenen Druckabbaupulses wird allerdings unwirksam gemacht, wenn die Reibwerterkennung in der Regellogik 5 Niedrigreibwert signalisiert.

Außerdem ist es in dem beschriebenen Ausführungsbeispiel der Erfindung vorgesehen, nach einer Anhebung des Druckaufbaues bzw. des variablen Pulses P1 auf den Mindestwert eine erneute Anhebung für ein oder mehrere Zyklen zu sperren, solange in den Druckaufbauphasen nicht mehr als eine bestimmte Zahl von Aufbaupulsen auftritt; beispielsweise wird diese Sperrung der Anhebung wieder aufgehoben, wenn in einem Zyklus mehr als zwei Aufbaupulse errechnet werden.

Zusätzlich kann in einem Ausführungsbeispiel der Erfindung die Dauer T₁ₙ des variablen Pulses P₁ₙ in Abhängigkeit von der Hochlaufbeschleunigung, die das entsprechende Fahrzeugrad in dem vorangegangenen Zyklus erfuhr, beeinflußt werden. Überschreitet diese Hochlaufbeschleunigung bestimmte Spitzenwerte, wird die Dauer des variablen Pulses P₁ₙ um vorgegebene Zeiteinheiten erhöht.

Nach einer Varianten der Erfindung ist es vorgesehen, den Druckwiederaufbau bereits einzuleiten, bevor das Rad wieder in seine stabile Phase eingetreten ist. Hierzu wird wiederum die Hochlaufbeschleunigung gemessen. Überschreitet sie einen vorgegebenen Schwellwert, der zwischen 10 und 15g liegen kann, und war der Druckabbau im vorangegangenen Zyklus relativ lang, wird sofort, d. h. beim Erreichen der Hochlaufbeschleunigungsschwelle, mit einem oder mehreren Pulsen Druck eingesteuert. Sobald das Rad dann seine Stabilitätsgrenze wieder erreicht, wird der Druckaufbau fortgesetzt.

Eine Berücksichtigung weiterer Kriterien bei der Berechnung des Druckaufbaues bzw. der Länge des variablen Impulses P1 ist ebenfalls möglich, um besonderen Bedingungen (Kurvenfahrt, Störungen, atypisches Raddrehverhalten etc.) Rechnung zu tragen.

## Patentansprüche

1. Schaltungsanordnung für eine Bremsanlage mit Blockierschutzregelung zur Steuerung des Druckaufbaues nach dem Einsetzen der Regelung durch Erzeugung von pulsförmigen Steuersignalen, mit denen in zu den Radbremsen führenden Druckmittelwegen eingefügte Mehrwegeventile steuerbar sind, wobei durch Bemessung der Puls- und Pulspausenzeiten der Druck zunächst mit steilem, danach mit flacherem Gradienten einsteuerbar ist und wobei der Druckaufbau im ersten Zyklus nach dem Einsetzen der Regelung von dem vorangegangenen Druckabbau und in den weiteren Zyklen von dem Druckaufbau in den vorangegangenen Zyklen abhängig ist,
mit Schaltkreisen (6,8), welche die Puls- und Pulspausenzeiten (T₁,T₁ₙ,T₂,T₂ₙ,Tₖ), die
den Druckaufbau bestimmen, in den auf den ersten Zyklus folgenden Zyklen jeweils
- von der Dauer des Druckaufbaues oder der Anzahl der Druckaufbaupulse während des Druckaufbaues mit steilem Gradienten im vorangegangenen Zyklus,
- von der Dauer (T₁,T₁ₙ + nT₂,T₂ₙ)der gesamten Druckaufbauphase des vorangegangenen Zyklus und
- von der Dauer (Tₒ,Tₒₙ) des vorangegangenen Druckabbaues abhängig machen,
wobei die Pulszeiten und insbesondere die Dauer (T₁,T₁ₙ) des Druckanstieges in der Phase des steilen Gradienten derart bemessen sind, daß bei annähernd konstantem Reibbeiwert und annähernd gleichbleibendem Vordruck die Blockiergrenze des Rades nach einer vorgegebenen Zeitspanne oder nach einer vorgegebenen Pulszahl wieder erreicht ist.

2. Schaltungsanordnung nach Anspruch 1, dadurch **gekennzeichnet,** daß der Druckaufbau mit steilem Gradienten durch einen variablen Puls (P1,P1ₙ) und der Druckaufbau mit flacherem Gradienten durch "feste" Pulse, d.h. relativ kurze Pulse (P2,P2ₙ) konstanter Dauer, die in konstantem Abstand (Tₖ) aufeinander folgen, herbeiführbar sind.

3. Schaltungsanordnung nach Anspruch 1, dadurch **gekennzeichnet,** daß der Druckaufbau mit steilem Gradienten durch einen variablen Puls (P1,P1ₙ), und der Druckaufbau mit flacherem Gradienten durch "feste" Pulse, d.h. relativ kurze, mit konstantem Abstand aufeinanderfolgende Pulsen (P2,P2ₙ), deren Dauer sich annähernd proportional zur Dauer des variablen Pulses (P1,P1n) verhält, herbeiführbar sind.

4. Schaltungsanordnung nach Anspruch 2 oder 3, dadurch **gekennzeichnet,** daß die vorgegebene Pulszahl (P1,P1ₙ + nP2,P2ₙ), nach der das Rad die Blockiergrenze wieder erreicht, einschließlich des variablen Pulses (P1,P1ₙ), 3 bis 5, vorzugsweise 3 beträgt.

5. Schaltungsanordnung nach einem oder mehreren der Ansprüche 1 bis 3, dadurch **gekennzeichnet,** daß die Pulszeiten (T₁,T₁ₙ,T₂,T₂ₙ) derart bemessen sind, daß sich eine Regelfrequenz von etwa 3 bis 10 Hz, vorzugsweise 3 bis 5 Hz, einstellt.

6. Schaltungsanordnung nach einem oder mehreren der Ansprüche 1 bis 5, dadurch **gekennzeichnet,** daß die Dauer des Druckanstieges mit steilem Gradienten (T₁,T₁ₙ) in Abhängigkeit von der Anzahl der Pulse oder der Dauer (T₁,T₁ₙ) des steilen Druckanstieges im vorangegangenen Zyklus und von der gesamten Druckaufbauphase oder der Gesamtzahl der Pulse in der Druckanstiegsphase mit flacherem Gradienten nach errechneten oder in einer Tabelle (Fig. 3) gespeicherten Werten ermittelbar ist.

7. Schaltungsanordnung nach Anspruch 6, dadurch **gekennzeichnet,** daß der errechnete oder aus der gespeicherten Tabelle (Fig. 3) ermittelte Wert für die Bemessung der Dauer (T₁ₙ) des steilen Druckanstieges unter Berücksichtigung des vorangegangenen Druckabbaues (Tₒ) variierbar bzw. korrigierbar ist und auf einen vorgegebenen Maximalwert oder auf einen vorgegebenen Minimalwert in Relation zu der Dauer des Druckabbaues reduziert bar bzw. anhebbar ist.

8. Schaltungsanordnung nach Anspruch 7, dadurch **gekennzeichnet,** daß der Maximalwert auf einen vorgegebenen Wert im Bereich zwischen 40 % und 60 % und der Minimalwert auf einen vorgegebenen Wert im Bereich zwischen 10 % und 30 % der Dauer des vorangegangenen Druckabbaues (Tₒ) festlegbar sind.

9. Schaltungsanordnung nach Anspruch 7 oder 8, dadurch **gekennzeichnet,** daß das Anheben des ermittelten Wertes (T₁ₙ) des steilen Druckanstieges beim Unterschreiten des vorgegebenen Minimalwertes unterbleibt, wenn der momentane Reibbeiwert gering ist.

10. Schaltungsanordnung nach Anspruch 7 oder 8, dadurch **gekennzeichnet,** daß nach dem Anheben des steilen Druckanstieges auf den Minimalwert in den folgenden Regelzyklen eine erneute Anhebung unterbleibt, solange die Dauer des Druckanstieges oder die Anzahl der Druckaufbaupulse während eines Regelzyklus einen vorgegebenen Grenzwert von z. B. 2 Pulsen nicht überschreitet.

11. Schaltungsanordnung nach einem oder mehreren der Ansprüche 1 bis 10, dadurch **gekennzeichnet,** daß der errechnete oder aus der Tabelle ermittelte Wert für die Dauer (T₁ₙ) des steilen Druckanstieges in Abhängigkeit von der zuvor gemessenen Hochlaufbeschleunigung des Rades anhebbar ist, wenn diese Hochlaufbeschleunigung vorgegebene Schwellen überschreitet.

12. Schaltungsanordnung nach einem oder mehreren der Ansprüche 1 bis 10, dadurch **gekennzeichnet,** daß ein Druckaufbau einleitbar ist, sobald die Hochlaufbeschleunigung einen vorgegebenen Grenzwert im Bereich zwischen 10 und 20g, z. B. 12 bis 15g, überschreitet, wenn im vorangegangenen Zyklus die Dauer des Druckabbaues relativ lang war bzw. über einem vorgegebenen Grenzwert lag.

## Claims

1. A circuit configuration for a brake system having an anti-locking control for controlling the pressure build-up after commencement of the control by generating pulse-type control signals capable to control multi-way valves that are inserted into pressure-fluid conduits leading to the wheel brakes, with the pressure being adapted to be metered first at a steep and then at a flatter gradient by way of dimensioning the pulse times and pulse break times, and with the pressure build-up in the first cycle after commencement of the control being dependent on the preceding pressure reduction and, in the following cycles, on the pressure increase in the preceding cycles,
comprising circuits (6, 8) which render the pulse times and pulse break times (T₁, T₁ₙ, T₂, T₂ₙ, Tₖ), determining the pressure build-up in the cycles following the first cycle dependent
- on the duration of the pressure build-up or the number of the pressure build-up pulses during the steep-gradient pressure build-up in the preceding cycle,
- on the duration (T₁, T₁ₙ + nT₂, T₂ₙ) of the entire pressure build-up phase of the preceding cycle, and
- on the duration (Tₒ, Tₒₙ) of the preceding pressure decrease,
with the pulse times and especially the duration (T₁, T₁ₙ) of the pressure rise in the steep-gradient phase being so dimensioned that, at an approximately constant coefficient of friction and at an approximately constant static pressure, the locking limit of the wheel is re-reached after a predetermined period of time or after a predetermined pulse number.

2. A circuit configuration as claimed in claim 1, characterized in that the steep-gradient pressure build-up can be effected by a variable pulse (P1, P1ₙ), while the flatter-gradient pressure build-up can be effected by "fixed" pulses, i.e. relatively short pulses (P2, P2ₙ) of a constant duration succeeding one another at a constant interval (Tₖ).

3. A circuit configuration as claimed in claim 1, characterized in that the steep-gradient pressure build-up can be effected by a variable pulse (P1, P1ₙ), while the flatter-gradient pressure build-up can be effected by "fixed" pulses, i.e. relatively short pulses (P2, P2ₙ) succeeding one another at a constant interval, the duration of which is approximately in proportion to the duration of the variable pulse (P1, P1n).

4. A circuit configuration as claimed in claim 2 or 3,
characterized in that the predetermined pulse number (P₁, P₁ₙ + nP2,P2ₙ), according to which the wheel re-reaches the locking limit, the variable pulse (P1, P1ₙ) included, is between 3 and 5, preferably is 3.

5. A circuit configuration as claimed in any one or more of claims 1 to 3,
characterized in that the pulse times (T₁, T₁ₙ, T₂, T₂ₙ) are so dimensioned that a control frequency of about 3 to 10 Hz, preferably 3 to 5 Hz, adjusts itself.

6. A circuit configuration as claimed in any one or more of claims 1 to 5,
characterized in that the duration of the steep-gradient (T₁, T₁ₙ) pressure rise can be determined in response to the number of pulses or the duration (T₁, T₁ₙ) of the steep pressure rise in the preceding cycle and to the entire pressure build-up phase or the total number of pulses in the pressure rise phase of flatter gradient according to values computed or stored in a Table (Figure 3).

7. A circuit configuration as claimed in claim 6,
characterized in that the value for dimensioning the duration (T₁ₙ) of the steep pressure rise computed or determined from the stored Table (Figure 3) can be varied or adjusted, respectively, under consideration of the preceding pressure reduction (Tₒ) and can be reduced or raised, respectively, to a predetermined maximum value or to a predetermined minimum value in relation to the duration of the pressure reduction.

8. A circuit configuration as claimed in claim 7,
characterized in that the maximum value can be fixed to a predetermined value in the range between 40 % and 60 %, and the minimum value can be fixed to a predetermined value in the range 10 % and 30 % of the duration of the preceding pressure reduction (Tₒ).

9. A circuit configuration as claimed in claim 7 or 8,
characterized in that raising of the determined value (T₁ₙ) of the steep pressure rise is precluded once the predetermined minimum value is fallen below in the event that the instantaneous coefficient of friction is low.

10. A circuit configuration as claimed in claim 7 or 8,
characterized in that after raising the steep pressure rise to the minimum value, a renewed rasing is precluded in the following control cycles as long as the duration of the pressure rise or the number of the pressure build-up pulses during a control cycle does not exceed a predetermined limit value of e.g. 2 pulses.

11. A circuit configuration as claimed in any one or more of claims 1 to 10,
characterized in that the value for the duration (T₁ₙ) of the steep pressure rise as computed or determined from the Table can be raised in response to the previously measured re-acceleration of the wheel once the said re-acceleration exceeds predetermined threshold values.

12. A circuit configuration as claimed in any one or more of claims 1 to 10,
characterized in that a pressure build-up can be initiated once the re-acceleration exceeds a predetermined limit value in the range between 10g and 20g, e.g. between 12g and 15g, if the duration of the pressure decrease in the preceding cycle was relatively long or was above a predetermined limit value, respectively.

## Revendications

1. Circuit pour système de freinage à régulation antiblocage, permettant de commander l'augmentation de pression suivant la mise en service de la régulation, en produisant des signaux de commande en forme d'impulsions au moyen desquels peuvent être commandées des valves à plusieurs voies insérées dans des trajets d'agent de pression conduisant aux freins de roues, tandis qu'au moyen d'une mesure des durées des impulsions et des intervalles séparant ces dernières, la pression peut être réglée d'une manière commandée en présentant d'abord un fort gradient, puis un gradient plus faible, et que l'augmentation de pression dépend, dans le premier cycle suivant la mise en service de la régulation, de la diminution précédente de pression et, dans les autres cycles, dépend de l'augmentation de pression dans les cycles précédents,
comprenant des circuits élémentaires (6, 8) qui rendent les durées d'impulsions et d'intervalles (T₁, T₁ₙ, T₂, T₂ₙ, Tₖ), qui déterminent l'augmentation de pression, dépendantes, dans chacun des cycles suivant le premier cycle, :
- de la durée de l'augmentation de pression ou du nombre d'impulsions d'augmentation de pression pendant l'augmentation de pression à fort gradient ayant eu lieu dans le cycle précédent,
- de la durée (T₁, T₁ₙ + nT₂, T₂ₙ) de l'ensemble de la phase d'augmentation de pression du cycle précédent et
- de la durée (T₀, T₀ₙ) de la diminution précédente de pression,
les durées d'impulsion, et notamment la durée (T₁, T₁ₙ) de l'augmentation de pression dans la phase à fort gradient, ayant des valeurs telles que, dans le cas d'un coefficient de frottement approximativement constant et d'une pression préalable approximativement uniforme, la limite de blocage de la roue est de nouveau atteinte après un intervalle de temps préfixé ou après un nombre préfixé d'impulsions.

2. Circuit suivant la revendication 1, caractérisé en ce que l'augmentation de pression à fort gradient est provoquée au moyen d'une impulsion variable (P1, P1ₙ) et l'augmentation de pression à plus faible gradient est provoquée au moyen d'impulsions "fixes", c'est-à-dire d'impulsions relativement courtes (P2, P2ₙ) à durée constante qui se succèdent à intervalle constant (Tₖ).

3. Circuit suivant la revendication 1, caractérisé en ce que l'augmentation de pression à fort gradient est provoquée au moyen d'une impulsion variable (P1, P1ₙ) et l'augmentation de pression à plus faible gradient est provoquée au moyen d'impulsions "fixes", c'est-à-dire d'impulsions relativement courtes (P2, P2ₙ) qui se succèdent à intervalle constant et dont la durée se comporte d'une manière approximativement proportionnelle vis-à-vis de la durée de l'impulsion variable (P1, P1n).

4. Circuit suivant l'une des revendications 2 et 3, caractérisé en ce que le nombre préfixé d'impulsions (P1, P1ₙ + nP2,P2ₙ), y compris l'impulsion variable (P1, P1ₙ), après lequel la roue réatteint la limite de blocage, est compris entre 3 et 5 et est de préférence égal à 3.

5. Circuit suivant l'une des revendications 1 à 3, caractérisé en ce que les durées d'impulsion (T₁, T₁ₙ, T₂, T₂ₙ) ont des valeurs telles qu'il s'établit une fréquence de régulation comprise entre 3 et 10 Hz, de préférence entre 3 et 5 Hz.

6. Circuit suivant l'une des revendications 1 à 5, caractérisé en ce que la durée de l'augmentation de pression à fort gradient (T₁, T₁ₙ) peut être déterminée en fonction du nombre des impulsions, ou de la durée (T₁, T₁ₙ) de l'augmentation de pression à fort gradient ayant eu lieu dans le cycle précédent, et de l'ensemble de la phase d'augmentation de pression ou du nombre total des impulsions dans la phase d'augmentation de pression à plus faible gradient, en tenant compte de valeurs calculées ou mises en mémoire dans une table (figure 3).

7. Circuit suivant la revendication 6, caractérisé en ce que la valeur calculée, ou déterminée à partir de la table en mémoire (figure 3), servant à mesurer la durée (T₁ₙ) de l'augmentation de pression à fort gradient, peut être soumise à une variation ou à une correction en tenant compte de la diminution précédente de pression (T₀) et peut être réduite ou relevée à une valeur maximale préfixée ou à une valeur minimale préfixée, en liaison avec la durée de la diminution de pression.

8. Circuit suivant la revendication 7, caractérisé en ce que la valeur maximale peut être fixée à une valeur préfixée comprise entre 40 % et 60 % de la durée de la diminution précédente de pression (T₀) et la valeur minimale être fixée à une valeur préfixée comprise entre 10 % et 30 % de cette durée.

9. Circuit suivant l'une des revendications 7 et 8, caractérisé en ce que le relèvement de la valeur déterminée (T₁ₙ) de l'augmentation de pression à fort gradient est interrompue, si le coefficient de frottement instantané est faible, lorsque la valeur minimale préfixée est atteinte franchie vers le bas.

10. Circuit suivant l'une des revendications 7 et 8, caractérisé en ce qu'après le relèvement de la valeur déterminée de l'augmentation de pression à fort gradient à la valeur minimale, un nouveau relèvement dans les cycles suivants de régulation n'a pas lieu tant que la durée de l'augmentation de pression ou le nombre des impulsions d'augmentation de pression pendant un cycle de régulation ne franchit pas vers le haut une valeur limite préfixée, par exemple égale à deux impulsions.

11. Circuit suivant l'une des revendications 1 à 10, caractérisé en ce que la valeur, calculée ou déterminée à partir de la table, qui est utilisée pour la durée (T₁ₙ) de l'augmentation de pression à fort gradient peut être relevée en fonction de l'accélération à pleine vitesse de la roue qui a été précédemment mesurée, lorsque cette accélération à pleine vitesse franchit vers le haut des seuls préfixés.

12. Circuit suivant l'une des revendications 1 à 10, caractérisé en ce qu'une augmentation de pression peut commencer dès que l'accélération à pleine vitesse franchit vers le haut une valeur limite préfixée comprise entre 10 et 20 g, par exemple entre 12 et 15 g, si, dans le cycle précédent la durée de la diminution de pression a été relativement longue ou était située au-dessus d'une valeur limite préfixée.
